# EUROPEAN PATENT SPECIFICATION

(11) **EP 2 972 098 B1**
(45) Date of publication and mention of the grant of the patent: **20.11.2019**
(21) Application number: 14708236.6
(22) Date of filing: 04.03.2014
(51) Int. Cl.: G01C 21/36

(54) **VISUAL SEARCH RESULTS**
VISUELLE SUCHERGEBNISSE
RÉSULTATS DE RECHERCHE VISUELLE

(30) Priority: 12.03.2013 US 201313796781
(43) Date of publication of application: 20.01.2016
(73) Proprietor: HERE Global B.V., 5611 ZT Eindhoven (NL)
(72) Inventor: BACH, Jeffrey, Aurora, Illinois 60502 (US)
(74) Representative: Potter Clarkson
(86) International application number: PCT/EP2014/054102
(87) International publication number: WO 2014/139828

(56) References cited:
- EP-A2- 1 024 467
- EP-A2- 1 024 467
- WO-A1-02/16875
- WO-A1-02/16875
- WO-A2-2007/044975
- WO-A2-2007/044975
- US-A1- 2012 303 275
- US-A1- 2012 303 275

## Description

### FIELD

The following disclosure relates to visual search results, or more particularly, a dynamic visual representation of search results.

### BACKGROUND

Mapping systems are available that provide end users with data from a map database. Mapping systems may offer a search to locate places, people, or landmarks on a map. Search results may appear on the map or in a conventional search result list. Navigation systems are available that provide end users with various navigation-related functions and features. For example, some navigation systems are able to determine an optimum route to travel along a road network or a pedestrian network from an origin location to a destination location in a geographic region. The navigation system may provide the end user with information about the optimum route in the form of guidance that identifies the maneuvers required to be taken by the end user to travel from the origin to the destination location. Some navigation systems are able to show detailed maps on displays outlining the route and perform searches similar to the map searches offered by mapping systems.

In both mapping systems and navigation systems search results often include a long list of results. Even when results are displayed on a two-dimensional map, the relative locations of the search results are difficult to visualize.

US2012/0303275 relates to a navigation system with an alphanumeric input device and a display which concurrently suggests destinations based on the alphanumeric input. WO2007044975 relates to a three dimensional building map with personal and general placement layers. A user can select the layers to be displayed.

### SUMMARY

In one embodiment, a mobile device or a server updates search results according to the method of claim 1.

### BRIEF DESCRIPTION OF THE DRAWINGS

Exemplary embodiments of the present invention are described herein with reference to the following drawings.
Figure 1 illustrates an example system for visual search results.
Figures 2A, 2B and 2C illustrate example visual search results.
Figures 3A and 3B illustrate additional example visual search results.
Figures 4A and 4B illustrate an example of a dynamic map for visual search results.
Figure 5 illustrates an exemplary server of the system of Figure 1.
Figure 6 illustrates an exemplary mobile device of the system of Figure 1.
Figure 7 illustrates another example flowchart for visual search results.

### DETAILED DESCRIPTION

The following embodiments include visual search results. The search results are presented in real time or near real time. As a search query is entered into a user interface, each character of the search query limits the search results in real time. For example, a user enters a search for "Joe's Salon." As the first two characters (j,o) are typed, the search results include Johnny Red Hots, Josephine's Cakes, Joe's Salon, Joe's Restaurant, and other results, which are displayed or highlighted on a map. Upon entry of the next character (e), the results include Joe's Salon and Joe's Restaurant, which are displayed on the map. The search results are narrowed while the user is typing or providing other inputs to the search query. The search results may be displayed substantially at the same time as the inputs to the search query are provided. The user may be able to identify Joe's Salon and distinguish Joe's Salon from Joe's Restaurant based on relative locations in the map because the user knows the approximate location of Joe's Salon. Once the user can identify the desired location, the user may choose to not enter any more search data.

The search results may be provided in a three-dimensional map or building model. Each of the search results may be defined as a latitude, longitude, and altitude. In addition, as characters are added to the search query or other limitations placed on the search query, the map may rotate, pan, or zoom to provide an optimal representation of the search results. The three-dimensional map provides context of the surrounding area, which cannot be shown by a two-dimensional map. The context includes the sizes of nearby buildings, and the density of nearby buildings. A two-dimensional map or a listing of search results cannot adequate convey the type of neighborhood of the search results. For example, if a user is searching for a downtown hotel, a three dimensional map better shows the sizes of buildings in the proximity of the search results.

In a three dimensional map, a user can easily search the desired geographic area looking for the specific location. Once the single result is highlighted, the user can interact with that result. The user can find specific building types. A user can search for restaurants in an area by beginning to type a term, such as "restaurant", the map will highlight all relevant matches in the area. Restaurants with a good view are easily identified. Similarly, boutique hotels are easily distinguished from high-rise hotels. If there are only a few matches, the user can very quickly review those results to get additional information. The three dimensional map also quickly and clearly demonstrates to the user when there are a large number of results matching a search and additional constraints may be required. For example, if there are hundreds of restaurants highlighted in the display area, the user can very quickly decide to type additional criteria as part of the search to further focus the search on a smaller number of results, such as "restaurant Indian". The user can continue typing the term until a manageable number of results are highlighted.

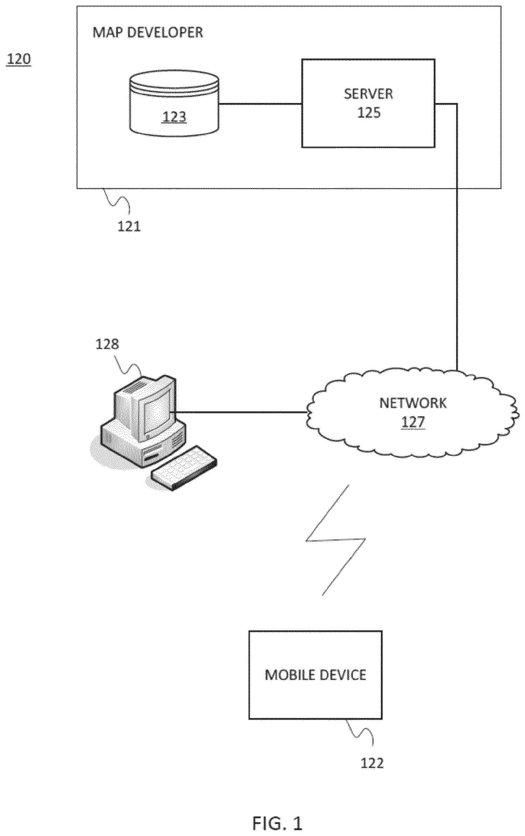

Figure 1 illustrates an exemplary system 120. The system 120 may be a mapping system to provide mapping-related functions or a navigation system to provide navigation-related functions. The system 120 includes a developer system 121, a mobile device 122, a workstation 128, and a network 127. Additional, different, or fewer components may be provided. Any of the mobile device 122, the workstation 128, or the developer system 121 alone or in combination may provide mapping-related functions or navigation-related functions based on the search results. The developer system 121 includes a server 125 and a database 123. The developer system 121 may include computer systems and networks of a system operator (e.g., NAVTEQ or Nokia Corp.).

The server 125 or database 123 may be configured to store a building model. The building model includes the location and geometries of buildings or other structures. The building model may list three-dimensional points for the vertices or corners of the buildings. The building may be formatted using any standard computer graphics or computer aided design standard, or any other possible format to represent a building.

In one example, the building model includes the latitude and longitude of four building corner locations and a height of multiple buildings. This example approximates all buildings as rectangular prisms. A more complex example for the building model includes a vector representation of the geometric shapes of the buildings in three dimensions. In the complex example, a single building may have multiple heights and the base of the building may be any polygon. The building model may be cross-referenced with locations for points of interest. A point-of-interest (POI) may be associated with a building in the building model or a portion of a building in the building model. In one alternative, the building model may omit three-dimensional coordinates and associated search results with building identification values.

The mobile device 122 is a smart phone, a mobile phone, a personal digital assistant ("PDA"), a tablet computer, a notebook computer, a personal navigation device ("PND"), a portable navigation device, and/or any other known or later developed portable or mobile computing device. The mobile device 122 may include one or more detectors or sensors as a positioning system built or embedded into or within the interior of the mobile device 122. The mobile device 122 receives location data from the positioning system, or the location can be provided by the user, or determined by other data or applications on the device.

The optional workstation 128 is a general purpose computer including programming specialized for the following embodiments. For example, the workstation 128 may receive user inputs for defining the search terms. The workstation 128 includes at least a memory, a processor, and a communication interface.

The developer system 121, the workstation 128, and the mobile device 122 are coupled with the network 127. The phrase "coupled with" is defined to mean directly connected to or indirectly connected through one or more intermediate components. Such intermediate components may include hardware and/or software-based components.

The computing resources may be divided between the server 125 and the mobile device 122. In some embodiments, the server 125 performs a majority of the processing. In other embodiments, the mobile device 122 or the workstation 128 performs a majority of the processing.

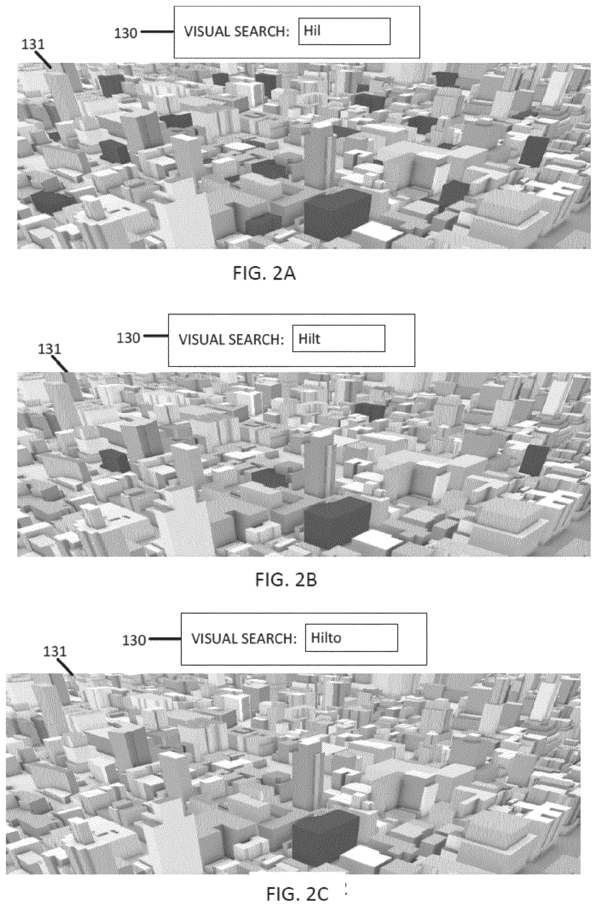

Figures 2A, 2B and 2C illustrate example visual search results. A user interface including a visual search window 130 receives a first partial search query. In the example shown in Figure 2A, the first partial search query is "Hil". The map database is queried using the partial search query. Three-dimensional map 131 includes a first set of map results from the map database. Approximately twenty-five results are emphasized or highlighted in the three-dimensional map 131 in the example of Figure 2A. The locations in the three-dimensional map 131 for emphasis may be derived from the building model.

The search results may include all results with a common prefix to "Hil" such as Hilton and Hillary Clinton. Alternatively, the search results may also include all results with a common trunk to "Hil" such as Phil's Steakhouse and Broyhill Furniture. Suffix searches may also be used. The selection of any combination of a prefix search, a trunk search, or a suffix search may be configurable by a user or administrator. Alternatively, may be automatic based on a number of search results returned. For example, the search defaults to a prefix search but is expanded to include a trunk search when the number of hits on the prefix search is less than a predetermined number (e.g., 2, 5, or 10).

Figure 2B illustrates a subsequent partial search query. The subsequent partial search query may be made in real time or within a predetermined time (e.g., 100 milliseconds, 500 milliseconds, or another value) of the first partial search query. The subsequent partial search query, "Hilt", is used to query the map database. Three-dimensional map 131 includes a second set of map results from the map database. Approximately five results are emphasized or highlighted in the three-dimensional map 131 in the example of Figure 2B. Alternatively, the first set of map results is narrowed or filtered according to the subsequent partial search query. The filtered or narrowed set of map results may be filtered and displayed in real time as the subsequent partial search query is received. The filtered or narrowed set of map results may be displayed in real time as the user continues to enter data. The filtered or narrowed set of map results may be updated after each character or other input is received from the user. The filtered or narrowed set of map results may be updated at a predetermined interval. Examples for the predetermined interval include 100 milliseconds, 200 milliseconds, another value. The predetermined interval may be any values in the range from 0 to 1 seconds. In both examples, the second set of map results may be a subset of the first set of map results. The difference between the first partial search query and the subsequent partial search query may be a predetermined number (e.g., 1, 2, or 3) alphanumeric characters in the search string. Alternatively, the difference between the first partial search query and the subsequent partial search query may be one or more selections (e.g., POI category, distance range, consumer rating, price level or another factor.)

Figure 2C illustrates another subsequent partial search query. The other subsequent partial search query may be made in real time or within a predetermined time (e.g., 100 milliseconds, 500 milliseconds, or another value) of the subsequent partial search query. The subsequent partial search query, "Hilto", is used to query the map database. Three-dimensional map 131 includes a third set of map results from the map database. A single result is emphasized or highlighted in the three-dimensional map 131 in the example of Figure 2C. The user did not need to enter the entire location name, "Hilton Chicago," to narrow the results to a single location.

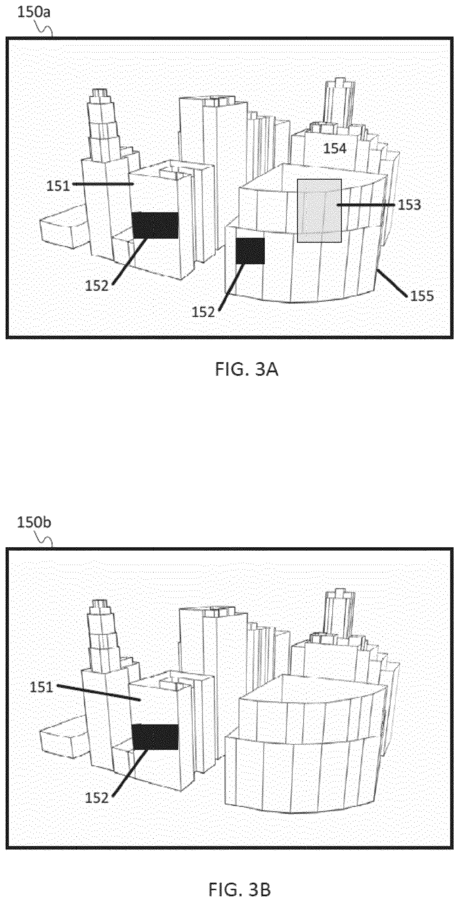

Figure 3A illustrates an additional example visual search results. A three-dimensional map 150a includes search hits 152. The search hits 152 are locations in buildings 151 and 155. As opposed to each search result highlighting an entire building, as shown in Figures 2A-C, the search hits 152 are limited to one or more floors in a building or a portion of one or more floors in a building. The search hits may correspond to a suite or an apartment number within the three dimensional building geometry. Each of the search results 152 may be associated with coordinates of a three-dimensional location (e.g., latitude, longitude, and altitude; or x, y, z).

The search hits may also include locations that are on the hidden buildings or hidden portions of buildings. For example, search hit 153 is a location in building 154 that is not visible in the three-dimensional map 150a. However, building 155 is transparent or semitransparent so that the search 153 is visible through the building 155.

Figure 3B illustrates another phase of the example visual search results of Figure 3A. A three-dimensional map 150b includes search hits 152 after the results have been narrowed. The results may be narrowed by entering additional characters in the search string. The results may be narrowed by selecting a desired building. In the narrowed search results, only the search hit 152 of building 151 remains. The search results may be narrowed by selecting another limiting criterion. Example limiting criteria include hours of operation, type of POI, reviews of the location, price range of the location, or another factor. The limiting criteria may be selected using check boxes, hyperlink, sliding selectors, or another input. The limiting criteria may be entered as part of the search query.

The search results may be used as input to a map-related feature or a navigation-related feature. The search hit 152 may be selected to provide information about the POI or location. The information may include operation hours, prices, names, reviews, or other information.

The information may be dynamic such as live music schedules, movie times, happy hour specials, current wait times, or other information. The information may include parking recommendations. For example, currently open parking locations may be shown in a search for parking. The three dimensional map allows the viewer to easily distinguish between street parking, parking garages, underground parking, and surface parking lots. A two-dimensional map cannot make this distinction between parking options.

The navigation-related features may include a route calculation application to navigate to the location in the search result. End users may access a route for the search result as the origin or the destination of the route. The route calculation application determines the route for the end user to travel along road segments, which include streets and highways as well as pedestrian paths, such as sidewalks, hallways, and stairways, and public transit, such as train routes and bus routes, to reach the desired destination. In order to calculate a route, the route calculation application is provided with data identifying a starting location (origin) and a desired destination location. In one embodiment, the starting location may be the end user's current position and the destination may be one of the selected search results. Given at least the identification of the starting location (origin) and the desired destination location, the route calculation application determines one or more solution routes between the starting location and the destination location. A solution route is formed of a series of connected road segments over which the end user can travel from the starting location to the destination location. When the route calculation application calculates a route, the application accesses the geographic database 123 and obtains data that represent road segments around and between the starting location and the destination location. The road calculation application uses the data to determine at least one valid solution route from the starting location to the destination location. The at least one valid solution route may be displayed to the user in the rendering of the geographic region such that addresses or points of interest along the route may be selected to display street side imagery.

In one embodiment, the route calculation application may attempt to find a solution route that takes the least time to travel. The segment cost or travel time for the particular represented road segment considers the type of road, such as freeway or residential street, speed limit and distance of the segment. In one embodiment, the route calculation application may consider traffic conditions to more accurately reflect actual travel time over the connected road segments. When the route calculation application determines one or more solution routes comprising the series of connected road segments, the travel times for each of the included connected road segments is summed to provide an estimated route travel time. Based on the route travel time, the route calculation application selects the quickest route. Once the route calculation application has selected the route, the route calculation application provides an output in the form of an ordered list identifying a plurality of road segments that form the continuous navigable route between the origin and the destination. In addition, the route calculation program provides an output of an estimated route travel time.

Map-related features may also utilize the search results. The map-related features may be any of the navigation-related features provided to the user without reference to the current location of the user or the device. In addition, map-related features may include display and manipulation of a map of a geographic region. The map-related features may be provided without navigation-related features.

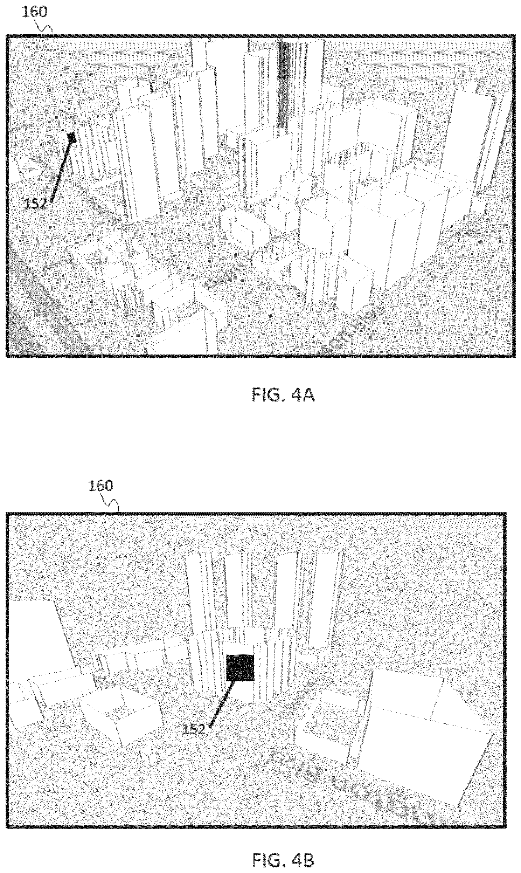

Figures 4A and 4B illustrate an example of a dynamic map 160 for visual search results. The dynamic map 160 changes according to the search string as the search string is entered. The dynamic map 160 may be refreshed or generated every predetermined number of characters entered into the search string. The predetermined number of characters may be 1, 2, 3 or another integer. The dynamic map 160 may be refreshed or generated based on the number of search results returned. When the number of search results falls below a threshold, the dynamic map 160 is refreshed. The threshold may be 1, 2, 3, or another integer.

The dynamic map 160 may be translated, rotated, zoomed, or scaled according to the search results. The dynamic map 160 may be zoomed to show only a predetermined area around the search result (e.g., the last remaining search result). The predetermined area may be configurable. When the search result is not visible in the current view, the dynamic map 160 may be rotated to show the search result (e.g., on the reverse side of a building). Figure 4A illustrates an example a search result 152 is in the background of the view and/or on a hidden side of the building. In Figure 4B, the dynamic map 160 is zoomed and rotated to better represent the search result 152.

The zooming or scaling may occur as the number of search results is narrowed to a single result. The dynamic map 160 for multiple search results may be displayed at a first scale for and the dynamic map 160 for a single search result may be displayed at a second scale. The second scale may be a greater number of pixels per geographic distance than the first scale.

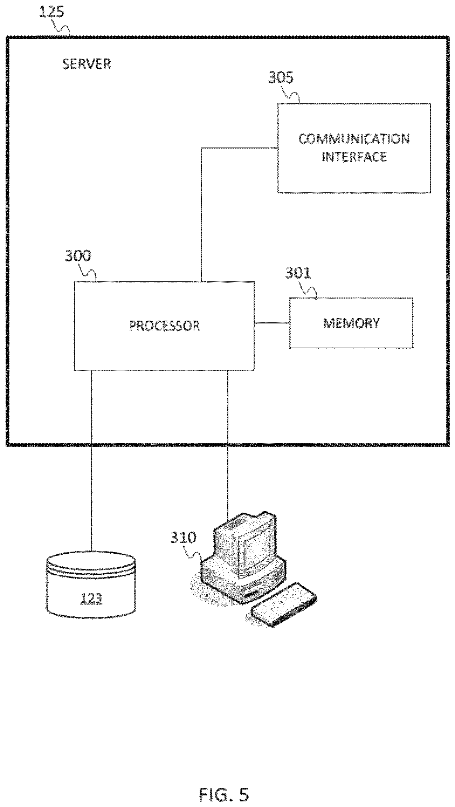

Figure 5 illustrates an exemplary server of the system of Figure 1. The server 125 is configured to render and/or modify three dimensional building models in real time to illustrate search results. The server 125 includes a processor 300, a communication interface 305, and a memory 301. The server 125 may be coupled to a database 123 and a workstation 310. The workstation 310 may be used as an input device for the server 125. In addition, the communication interface 305 is an input device for the server 125. The communication interface 305 receives data indicative of use inputs made via the workstation 128 or the mobile device 122.

The database 123 or memory 301 may include a map database configured to store map data. The processor 300, which may be any type of controller, is configured to query the map database with a search query for search results. The search query may be entered into a window or prompt by a user. The search query may be a portion of a word or any number of alphanumeric characters. The graphical search results are displayed after only the portion of the word is entered by the user. The search results may include points-of-interest, individual addresses, or any geographic location in the map data.

The processor 300 is also configured to filter or narrow the graphical search results as one or more additional characters are entered into the search query window or other limiting criteria are placed on the search results. As the limiting criteria are entered, some of the search results disappear from the graphic map search results. While, (e.g., at the same time or overlapping times), that the data for changing the search query is being entered by the user, the search results are changed and displayed in real time. The search results may be updated and displayed at substantially the same time that the query data is entered.

The graphical map search results and filtered graphical map search results may be displayed on a three dimensional building model. The three dimensional building model may include outlines of buildings. Individual building outlines may be illuminated, bolded, colored or otherwise distinguished according to the graphical map search results and filtered graphical map search results. One example includes a virtual spotlight to make the search result buildings appear as if light is shining on the buildings. Non-matching buildings may be greyed out. In one alternative, individual suites, floors, or portions associated with hits in the search results are distinguished on the search results.

Another example, adds textures and colors from street side imagery onto the buildings of the search results. The street side imagery may be accessed from an image bubble collected at street level and displayed on the three dimensional building model. In another example, a point cloud generated by a light detection and ranging (LIDAR) device is colorized using data from an image bubble. The colorized LIDAR data appears as an image but can be manipulated into any perspective to fit the three dimensional building model. Based on a selected point in a search result, one or more image bubbles are chosen. The image bubbles are photographs that contain a view of the selected point on the building model. The section of the image bubble that looks at the selected point is extracted and displayed as an overlay on the screen. The extracted image presents a targeted, real-world street-level view of the building as an on-demand operation. Such a simplified or symbolic interface is easy and efficient to understand and navigate, while allowing the user to view detailed building facades when desired. Further, one or more of these extracted image sections may also be projected onto the building model such that at least a portion of one of the image bubbles is draped over the three dimensional shape of building model. Further examples may be found in Patent Application No. 13/536,589 titled On Demand Image Overlay and filed June 28, 2012.

The database 123 or memory 301 may include a map database configured to store building identification values associated with potential search results and the controller is configured to access at least one building identification value associated with the search query. The building identification value may include two parts. A first part of a building identification value represents the location of the building and may be an address of the building or the latitude and longitude of the building. A second part of the building identification value may indicate a floor, a suite number, or an apartment number. The second part of the building identification value may indicate a relative location within the building. The relative location may be a decimal representation of a floor. For example, the 40^{th} floor in a 50 floor building may be represented by 0.80. The building identification value may be "123EImSt,0.80". The comma separates the first part of the building identification value from the second part of the building identification value.

Alternatively, database 123 or memory 301 may include street addresses associated with potential search results and the controller is configured to access the three dimensional building model according to a street address associated with the search query.

The geographic database 123 may also include information about one or more geographic regions. Located in the geographic region are physical geographic features, such as roads, points of interest (including businesses, municipal facilities, etc.), lakes, rivers, railroads, municipalities, etc. A road network includes, among other things, roads and intersections located in the geographic region. Each road in the geographic region is composed of one or more road segments. A road segment represents a portion of the road. Each road segment is associated with two nodes (e.g., one node represents the point at one end of the road segment and the other node represents the point at the other end of the road segment). The node at either end of a road segment may correspond to a location at which the road meets another road, i.e., an intersection, or where the road dead-ends. The road segments may include sidewalks and crosswalks for travel by pedestrians.

The road segment data includes a segment ID by which the data record can be identified in the geographic database 123. Each road segment data record has associated with it information (such as "attributes", "fields", etc.) that describes features of the represented road segment. The road segment data record may include data that indicate a speed limit or speed category (i.e., the maximum permitted vehicular speed of travel) on the represented road segment. The road segment data record may also include data that indicate a classification such as a rank of a road segment that may correspond to its functional class.

The road segment data may include data identifying what turn restrictions exist at each of the nodes which correspond to intersections at the ends of the road portion represented by the road segment, the name or names by which the represented road segment is known, the length of the road segment, the grade of the road segment, the street address ranges along the represented road segment, the permitted direction of vehicular travel on the represented road segment, whether the represented road segment is part of a controlled access road (such as an expressway), a ramp to a controlled access road, a bridge, a tunnel, a toll road, a ferry, and so on.

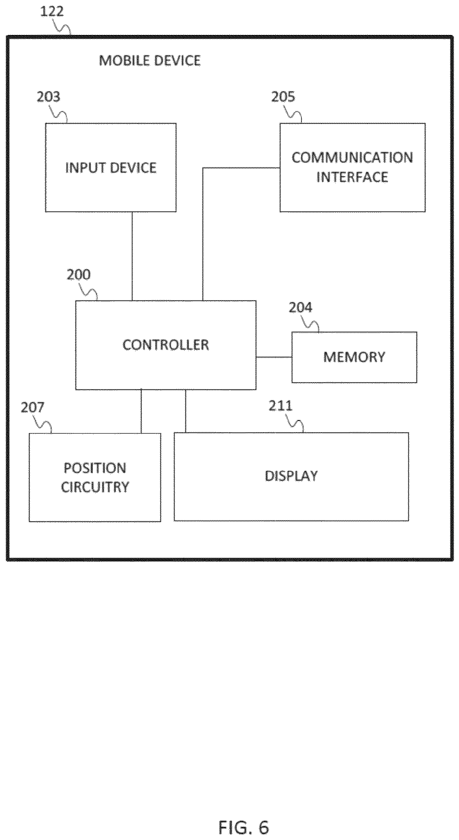

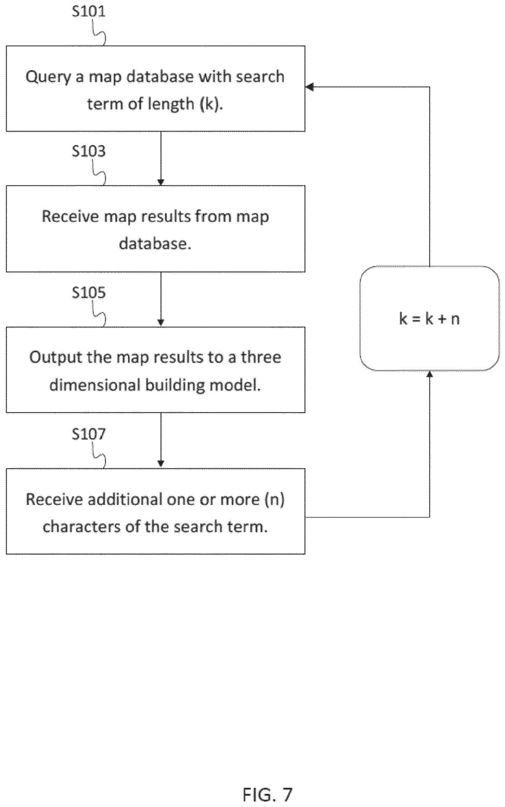

Figure 6 illustrates an exemplary mobile device of the system of Figure 1. The mobile device 122 may be referred to as a navigation device. The mobile device 122 includes a controller 200, a memory 204, an input device 203, a communication interface 205, position circuitry 207, a camera 209, and a display 211. The workstation 128 may include at least a memory and processor and may be substituted for the mobile device in the following endpoint-based embodiments. In the following endpoint-based embodiments, the mobile device 122 or the workstation 128 performs a majority of the processing. Figure 7 illustrates an example flowchart for search results in three-dimensional building models, which is described in relation to the mobile device 122 but may be performed by another device. Additional, different, or fewer acts may be provided.

At act S101, the controller 200 is configured to query a map database with a search term. The search term has k characters. Based on the k-character search term, the controller 200 or a server 125 queries a geographic database for map results. The map results may include business names, residential addresses, geographic features, points-of-interest or other data. Fuzzy matching may be used when less than a predetermined number of results (e.g., 1, 2, 10 or another number) are returned or when the search string is misspelled.

At act S103, the controller 200 receives the map results from a map database. The map results may include the geographic coordinates of buildings or other structures that match the search query. The map results may indicate specific locations within a building or a structure.

At act S105, the controller 200 generates or modifies a three dimensional building model to highlight the map results. The buildings or building locations in the search results may be darkened, lightened, enlarged or colored with a different color. The various colors may indicate the type of search result (e.g., how close of a match), whether the location is open, whether the location is a preferred advertiser, or whether the location has received favorable reviews. In one example, different types of results are highlighted in different colors. For example, restaurants may be colored in red, hotels colored in brown, and tourist attractions colored in green.

At act S107, the controller 200 is configured to receive additional characters from the user or additional limiting criteria. The additional characters may be a number (n) of characters or selections. The additional characters or limiting criteria are used to narrow or filter the search results. Acts S101-105 are repeated for a search term of length k + n. Acts S101-105 may be repeated while the user is typing or providing the limiting criteria. No other input, such as clicking search or pressing enter, is needed. Acts S101-105 repeated in response to the additional characters or limiting criteria. Characters may also be removed or deleted and acts S101-105 are repeated for a search term of length k - n. Alternatively, the processor 300 of the server 125 performs one or more of acts S101-S107.

The input device 203 is configured to receive the search terms. The input device 203 may also receive a selection for the threshold for defining when the dynamic map rotates or zooms to the narrowed search results. The input device 203 may be one or more buttons, keypad, keyboard, mouse, stylist pen, trackball, rocker switch, touch pad, voice recognition circuit, or other device or component for inputting data to the mobile device 122. The input device 203 and the display 211 may be combined as a touch screen, which may be capacitive or resistive. The display 211 may be a liquid crystal display (LCD) panel, light emitting diode (LED) screen, thin film transistor screen, or another type of display.

The positioning circuitry 207 is optional and may be excluded for the map-related functions. The positioning circuitry 207 may include a Global Positioning System (GPS), Global Navigation Satellite System (GLONASS), or a cellular or similar position sensor for providing location data. The positioning system may utilize GPS-type technology, a dead reckoning-type system, cellular location, or combinations of these or other systems. The positioning circuitry 207 may include suitable sensing devices that measure the traveling distance, speed, direction, and so on, of the mobile device 122. The positioning system may also include a receiver and correlation chip to obtain a GPS signal. Alternatively or additionally, the one or more detectors or sensors may include an accelerometer built or embedded into or within the interior of the mobile device 122. The accelerometer is operable to detect, recognize, or measure the rate of change of translational and/or rotational movement of the mobile device 122. The mobile device 122 receives location data from the positioning system. The location data indicates the location of the mobile device 122.

The controller 200 and/or processor 300 may include a general processor, digital signal processor, an application specific integrated circuit (ASIC), field programmable gate array (FPGA), analog circuit, digital circuit, combinations thereof, or other now known or later developed processor. The controller 200 and/or processor 300 may be a single device or combinations of devices, such as associated with a network, distributed processing, or cloud computing.

The memory 204 and/or memory 301 may be a volatile memory or a non-volatile memory. The memory 204 and/or memory 301may include one or more of a read only memory (ROM), random access memory (RAM), a flash memory, an electronic erasable program read only memory (EEPROM), or other type of memory. The memory 204 and/or memory 301 may be removable from the mobile device 100, such as a secure digital (SD) memory card.

The communication interface 205 and/or communication interface 305 may include any operable connection. An operable connection may be one in which signals, physical communications, and/or logical communications may be sent and/or received. An operable connection may include a physical interface, an electrical interface, and/or a data interface. The communication interface 205 and/or communication interface 305 provides for wireless and/or wired communications in any now known or later developed format.

The network 127 may include wired networks, wireless networks, or combinations thereof. The wireless network may be a cellular telephone network, an 802.11, 802.16, 802.20, or WiMax network. Further, the network 127 may be a public network, such as the Internet, a private network, such as an intranet, or combinations thereof, and may utilize a variety of networking protocols now available or later developed including, but not limited to TCP/IP based networking protocols.

While the non-transitory computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer-implemented method comprising:
receiving a first partial search query comprising one or more alphanumeric characters;
querying a map database (123) with the first partial search query;
displaying a first set of map results (152, 153) from the map database on a three-dimensional map (131; 150a, 150b; 160) or three-dimensional building model;
receiving a second partial search query, wherein the second partial search query includes the first partial search query and one or more additional limiting criteria;
narrowing the first set of map results with the second partial search query; and
displaying a second set of map results (152, 153) from the map database on the three-dimensional map or three-dimensional building model, wherein the second set of map results is a subset of the first set of map results,
wherein the first set of map results includes one or more of an entire building, a floor, a portion of a floor, a suite, or an apartment, and
wherein displaying the first set of map results comprises highlighting or emphasizing the one or more of an entire building, a floor, a portion of a floor, a suite, or an apartment.

2. The method of claim 1, wherein the second set of map results (152, 153) is displayed at substantially a same time as the second partial search term is received.

3. The method of claim 1, wherein the one or more additional limiting criteria is one of more of:
one or more additional characters;
a selection of a desired building; or
based on hours of operation, type of point of interest, reviews or price range.

4. The method of claim 1, wherein the map results (152, 153) include one or more of: points-of-interest, business names, street addresses or geographic features.

5. The method of claim 1, further comprising:
displaying a map (131; 150a, 150b; 160) at a first scale for the first set of map results (152, 153); and
displaying the map at a second scale for the second set of map results (152, 153).

6. The method of claim 1, further comprising:
rotating, translating, zooming or scaling the three-dimensional map (131; 150a, 150b; 160) or building model according to the second partial search query; or
rotating or scaling the three-dimensional map or building model according to a selection from the second set of map results (152, 153).

7. The method of claim 1, wherein narrowing the first set of map results (152, 153) with the second partial search query comprises one of:
querying the map database (123) with the second partial search query; and
narrowing the first set of map results using the additional limiting criteria.

8. The method of claim 1, further comprising:
receiving a third partial search query, the third partial search query comprising one or more fewer characters than the second search query;
querying the map database (123) with the third partial search query; and
displaying a third set of map results (152, 153) on the three-dimensional map or three-dimensional building model, wherein the second set of map results (152, 153) is a subset of the third set of map results.

9. An apparatus (122; 125) or system (120) configured to perform a method as claimed in any of claims 1-8.

10. A non-transitory computer readable medium including instructions that when executed are operable to perform a method as claimed in any of claims 1-8.

## Patentansprüche

1. Computerimplementiertes Verfahren, umfassend:
Empfangen einer ersten teilweisen Suchabfrage, die ein oder mehrere alphanumerische Zeichen umfasst;
Abfragen einer Kartendatenbank (123) mit der ersten teilweisen Suchabfrage;
Anzeigen eines ersten Satzes von Kartenergebnissen (152, 153) aus der Kartendatenbank auf einer dreidimensionalen Karte (131; 150a, 150b; 160) oder einem dreidimensionalen Gebäudemodell;
Empfangen einer zweiten teilweisen Suchabfrage, wobei die zweite teilweise Suchabfrage die erste teilweise Suchabfrage und ein oder mehrere zusätzliche einschränkende Kriterien einschließt;
Begrenzen des ersten Satzes von Kartenergebnissen mit der zweiten teilweisen Suchabfrage; und
Anzeigen eines zweiten Satzes von Kartenergebnissen (152, 153) aus der Kartendatenbank auf der dreidimensionalen Karte oder dem dreidimensionalen Gebäudemodell, wobei der zweite Satz von Kartenergebnissen ein Teilsatz des ersten Satzes von Kartenergebnissen ist, wobei der erste Satz von Kartenergebnissen ein gesamtes Gebäude, ein Stockwerk, einen Abschnitt eines Stockwerks, eine Suite und/oder eine Wohnung einschließt, und wobei das Anzeigen des ersten Satzes von Kartenergebnissen ein Hervorheben oder Betonen des gesamten Gebäudes, des Stockwerks, des Abschnitts eines Stockwerks, der Suite und/oder der Wohnung umfasst.

2. Verfahren nach Anspruch 1, wobei der zweite Satz von Kartenergebnissen (152, 153) im Wesentlichen zu einer gleichen Zeit angezeigt wird, zu der der zweite teilweise Suchbegriff empfangen wird.

3. Verfahren nach Anspruch 1, wobei das eine oder die mehreren zusätzlichen einschränkenden Kriterien Folgende sind:
ein oder mehrere zusätzliche Zeichen;
eine Auswahl eines gewünschten Gebäudes; und/oder
basierend auf Betriebszeiten, Art eines interessanten Orts, Bewertungen oder Preisspanne.

4. Verfahren nach Anspruch 1, wobei die Kartenergebnisse (152, 153) Folgendes einschließen:
interessante Orte, Handelsnamen, Hausanschriften und/oder geografische Merkmale.

5. Verfahren nach Anspruch 1, ferner umfassend:
Anzeigen einer Karte (131; 150a, 150b; 160) bei einem ersten Maßstab für den ersten Satz von Kartenergebnissen (152, 153); und
Anzeigen der Karte bei einem zweiten Maßstab für den zweiten Satz von Kartenergebnissen (152, 153).

6. Verfahren nach Anspruch 1, ferner umfassend:
Drehen, Verschieben, Zoomen oder Skalieren der dreidimensionalen Karte (131; 150a, 150b; 160) oder des Gebäudemodells gemäß der zweiten teilweisen Suchabfrage; oder
Drehen oder Skalieren der dreidimensionalen Karte oder des Gebäudemodells gemäß einer Auswahl aus dem zweiten Satz von Kartenergebnissen (152, 153).

7. Verfahren nach Anspruch 1, wobei das Begrenzen des ersten Satzes von Kartenergebnissen (152, 153) mit der zweiten teilweisen Suchabfrage Folgendes umfasst:
Abfragen der Kartendatenbank (123) mit der zweiten teilweisen Suchabfrage; oder
Begrenzen des ersten Satzes von Kartenergebnissen unter Verwendung der zusätzlichen einschränkenden Kriterien.

8. Verfahren nach Anspruch 1, das ferner Folgendes umfasst:
Empfangen einer dritten teilweisen Suchabfrage, wobei die dritte teilweise Suchabfrage ein oder mehrere Zeichen weniger als die zweite Suchabfrage umfasst;
Abfragen der Kartendatenbank (123) mit der dritten teilweisen Suchabfrage; und
Anzeigen eines dritten Satzes von Kartenergebnissen (152, 153) auf der dreidimensionalen Karte oder dem dreidimensionalen Gebäudemodell, wobei der zweite Satz von Kartenergebnissen (152, 153) ein Teilsatz des dritten Satzes von Kartenergebnissen ist.

9. Vorrichtung (122; 125) oder System (120), die/das konfiguriert ist, um ein Verfahren nach einem der Ansprüche 1-8 durchzuführen.

10. Nichtflüchtiges computerlesbares Medium, einschließlich Anweisungen, die, wenn sie ausgeführt werden, betriebsfähig sind, um ein Verfahren nach einem der Ansprüche 1-8 durchzuführen.

## Revendications

1. Procédé mis en œuvre par ordinateur, comprenant :
la réception d'une première requête de recherche partielle comprenant un ou plusieurs caractères alphanumériques ;
l'interrogation d'une base de données cartographique (123) en utilisant la première requête de recherche partielle ;
l'affichage d'un premier ensemble de résultats cartographiques (152, 153) à partir de la base de données cartographique sur une carte tridimensionnelle (131 ; 150a, 150b ; 160) ou un modèle de construction tridimensionnel ;
la réception d'une deuxième requête de recherche partielle, la deuxième requête de recherche partielle incluant la première requête de recherche partielle et un ou plusieurs critères de limitation supplémentaires ;
la réduction du premier ensemble de résultats cartographiques en utilisant la deuxième requête de recherche partielle ; et
l'affichage d'un deuxième ensemble de résultats cartographiques (152, 153) à partir de la base de données cartographique sur la carte tridimensionnelle ou le modèle de construction tridimensionnel, le deuxième ensemble de résultats cartographiques étant un sous-ensemble du premier ensemble de résultats cartographiques, le premier ensemble de résultats cartographiques incluant au moins un ou plusieurs éléments parmi un bâtiment entier, un étage, une partie d'étage, une suite ou un appartement, et l'affichage du premier ensemble de résultats cartographiques comprenant la mise en relief ou la mise en évidence des un ou plusieurs éléments parmi un bâtiment entier, un étage, une partie d'étage, une suite ou un appartement.

2. Procédé selon la revendication 1, dans lequel le deuxième ensemble de résultats cartographiques (152, 153) est affiché sensiblement au même moment que la réception du deuxième terme de recherche partiel.

3. Procédé selon la revendication 1, dans lequel les un ou plusieurs critères de limitation supplémentaires sont un ou plusieurs des éléments suivants :
un ou plusieurs caractères supplémentaires ;
une sélection d'un bâtiment souhaité ; ou
basé sur les heures de fonctionnement, le type de point d'intérêt, les révisions ou la fourchette de prix.

4. Procédé selon la revendication 1, dans lequel les résultats cartographiques (152, 153) incluent un ou plusieurs des éléments suivants :
points d'intérêt, noms commerciaux, adresses postales ou caractéristiques géographiques.

5. Procédé selon la revendication 1, comprenant en outre :
l'affichage d'une carte (131 ; 150a, 150b ; 160) à une première échelle pour le premier ensemble de résultats cartographiques (152, 153) ; et
l'affichage de la carte à une seconde échelle pour le deuxième ensemble de résultats cartographiques (152, 153).

6. Procédé selon la revendication 1, comprenant en outre :
la rotation, la translation, le zoom ou la mise à l'échelle de la carte tridimensionnelle (131 ; 150a, 150b ; 160) ou du modèle de construction en fonction de la deuxième requête de recherche partielle ; ou
la rotation ou la mise à l'échelle de la carte tridimensionnelle ou du modèle de construction en fonction d'une sélection à partir du deuxième ensemble de résultats cartographiques (152, 153).

7. Procédé selon la revendication 1, dans lequel la réduction du premier ensemble de résultats cartographiques (152, 153) en utilisant la deuxième requête de recherche partielle comprend l'une des manières suivantes :
l'interrogation de la base de données cartographique (123) en utilisant la deuxième requête de recherche partielle ; et
la réduction du premier ensemble de résultats cartographiques en utilisant les critères de limitation supplémentaires.

8. Procédé selon la revendication 1, comprenant en outre :
la réception d'une troisième requête de recherche partielle, la troisième requête de recherche partielle comprenant un ou plusieurs caractères de moins que la deuxième requête de recherche ;
l'interrogation de la base de données cartographique (123) en utilisant la troisième requête de recherche partielle ; et
l'affichage d'un troisième ensemble de résultats cartographiques (152, 153) sur la carte tridimensionnelle ou le modèle de construction tridimensionnel, le deuxième ensemble de résultats cartographiques (152, 153) étant un sous-ensemble du troisième ensemble de résultats cartographiques.

9. Appareil (122 ; 125) ou système (120) conçu pour exécuter un procédé selon l'une des revendications 1 à 8.

10. Support non transitoire lisible par ordinateur, incluant des instructions qui, lorsqu'elles sont exécutées, peuvent être utilisées pour exécuter un procédé selon l'une des revendications 1 à 8.
